# EUROPEAN PATENT SPECIFICATION

(11) **EP 3 221 605 B1**
(45) Date of publication and mention of the grant of the patent: **30.12.2020**
(21) Application number: 15805030.2
(22) Date of filing: 19.11.2015
(51) Int. Cl.: F16D 27/112, F16D 11/00, F16D 27/108, F16D 11/10

(54) **METHOD AND SYSTEM FOR UNLOCKING AN ELECTROMAGNETIC ACTUATOR**
VERFAHREN UND SYSTEM ZUM ENTSPERREN EINES ELEKTROMAGNETISCHEN AKTUATORS
METHODE ET SYSTEME POUR DEBLOQUER UN ACTIONNEUR ELECTROMAGNETIQUE

(30) Priority: 19.11.2014 US 201462081962 P
(43) Date of publication of application: 27.09.2017
(73) Proprietor: Dana Automotive Systems Group, LLC, Maumee, OH 43537 (US)
(72) Inventor: GOOSSENS, Stijn, 9420 Erpe-Mere (BE)
(74) Representative: Pfenning, Meinig & Partner mbB
(86) International application number: PCT/US2015/061617
(87) International publication number: WO 2016/081741

(56) References cited:
- US-A- 5 825 604
- US-A1- 2012 228 076

## Description

### BACKGROUND

All-wheel drive capable vehicles have many advantages over vehicles having a driveline connected to only a single axle. Specifically, all-wheel drive capable vehicles have increased traction and enhanced drivability over similar vehicles that are driven using only a single axle.

However, traditional all-wheel drive vehicles are disadvantaged by requiring continuous rotation of a second drive axle, and other portions of the driveline, at road speed, even when the all-wheel drive functionality is not beneficial. Consequently, traditional all-wheel drive vehicles tend to have reduced fuel, and overall, efficiency when compared to vehicles having only a single drive axle.

All-wheel drive vehicles incorporating a secondary driveline disconnect feature are being developed. In such vehicles, when a control system detects that all-wheel drive functionality is not required, the control system disconnects the second drive axle (and other associated driveline components) to place the driveline into a single axle drive mode. Once the second drive axle is disconnected, there is no transfer of torque to the second drive axle. As a result, speed-dependent losses associated with the second drive axle (and other associated driveline components) are eliminated by allowing the second drive axle (and other associated driveline components) to remain in an idle condition.

Secondary driveline disconnect systems may utilize an electromagnetic actuator to perform an engagement and a disengagement of the secondary driveline. Remanent magnetization may be utilized to place the electromagnetic actuator in a stable state without the application of current thereto. However, removing the remanent magnetization in a consistent and predictable manner using conventional methods may be affected by many operational variables, such as but not limited to, temperature, manufacturing tolerances, and part variation.

Document US 2012/0228076 A1 discloses an electromagnetic (EM) clutch assembly including input and output discs, a plunger, a control solenoid, and a controller. The input disc is connected to a rotatable input member, and defines an input face having a mechanical feature. The output disc is connected to a rotatable output member, and includes a bore wall defining a bore. The plunger is positioned at least partially within the bore. The controller transmits a time-varying electrical control signal to the solenoid to thereby resonate the plunger toward the input disc, and transmits a steady-state electrical control signal to capture the plunger in an engaged position. Rotation of the discs is controlled until the plunger encounters the mechanical feature, thereby placing the assembly in an engaged state.; A vehicle having a transmission and the EM clutch assembly is also disclosed, as is a method for controlling the clutch assembly via the electrical control signals.

Document US 5 825 604 discloses a demagnetization (degaussing) circuit, wherein main electrodes of a TRIAC, a first positive temperature characteristic thermistor and a demagnetization coil are connected in series to both ends of an AC supply, and a heat-sensitive switch and a heating resistor are connected in series between an end of the TRIAC on the side of the AC supply and an end of the demagnetization coil on the side of the AC supply. A connecting point between the heat-sensitive switch and the heating resistor is connected to a gate electrode of the TRIAC, and the heat-sensitive switch and the heating resistor are thermally coupled to each other. The disclosed demagnetization circuit does not need a secondary electric circuit such as a relay control circuit and allows easy substrate design, with a small number of components and at low cost. Furthermore, a demagnetization current sufficiently damps to the level causing no color misregistration and color unevenness on a screen of a color television receiver, from the time the color television receiver is powered on until the time a picture appears on the screen.

The appended claims define a method for consistently and efficiently connecting and disconnecting an electromagnetic actuator.

### BRIEF DESCRIPTION OF THE SEVERAL VIEWS OF THE DRAWINGS

The accompanying drawings, incorporated herein as part of the specification, illustrate the presently disclosed subject matter, and with the description, serve to explain the principles of the disclosed subject matter and to enable a person skilled in the pertinent art to make and use the disclosed subject matter.
FIG. 1 is a schematic diagram of a portion of a portion of an automobile driveline having primary and secondary wheel sets according to an embodiment of the presently disclosed subject matter;
FIG. 2 is a cross-section of a portion of an electromagnetic rapid disconnect apparatus according to an embodiment of the presently disclosed subject matter;
FIG. 3 is a graph of a decaying sine-wave having exponentially decreasing amplitude according to an embodiment of the presently disclosed subject matter;
FIG. 4 is a graph of a series of hysteresis curves illustrating a degaussing process according to an embodiment of the presently disclosed subject matter;
FIG. 5 is a schematic diagram of a circuit according to an embodiment of the presently disclosed subject matter;
FIG. 6 is perspective view cross-section of a portion of an electromagnetic rapid disconnect apparatus according to an embodiment of the presently disclosed subject matter;
FIG. 7 is a cross-section of the electromagnetic rapid disconnect apparatus according to FIG. 6.

### DETAILED DESCRIPTION OF EMBODIMENTS

It is to be understood that the presently disclosed subject matter may assume various alternative orientations and step sequences, except where expressly specified to the contrary. It is also to be understood that the specific devices, assemblies, systems and processes illustrated in the attached drawings, and described in the following specification are simply exemplary embodiments of the inventive concepts defined herein. Hence, specific dimensions, directions or other physical characteristics relating to the embodiments disclosed are not to be considered as limiting, unless expressly stated otherwise. Also, although they may not be, like elements in various embodiments described herein may be commonly referred to with like reference numerals within this section of the application.

Certain embodiments of a driveline disconnect system 200 are utilized with an all-wheel-drive ("AWD") driveline assembly. However, the driveline disconnect apparatus 200 is not limited to use with the driveline assemblies described herein. The driveline disconnect apparatus 200 may be utilized with, but is not limited to, driveline assemblies of other shapes, sizes, orientations, and designs in automobiles and manufacturing equipment.

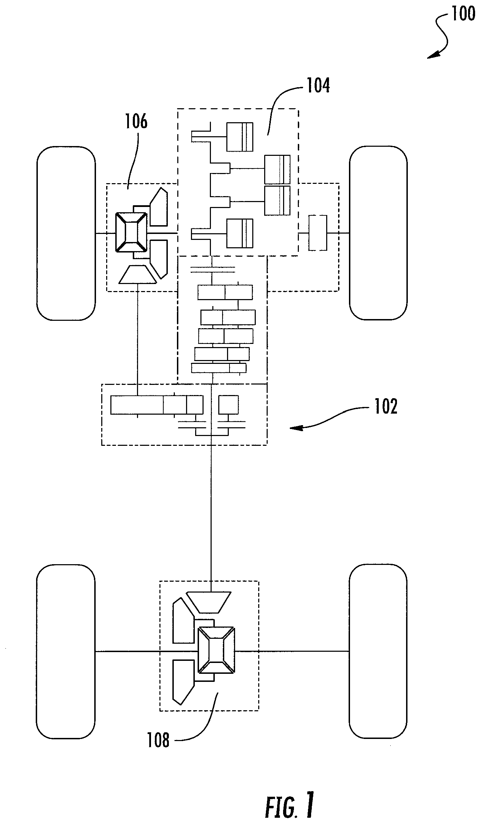

FIG. 1 illustrates an embodiment of the presently disclosed subject matter wherein a vehicle 100 includes a driveline 102 having all-wheel drive functionality. The driveline 102 comprises a power source 104, a final drive unit 106, and a rear drive unit 108. The driveline 102 further includes a driveline disconnect system 200.

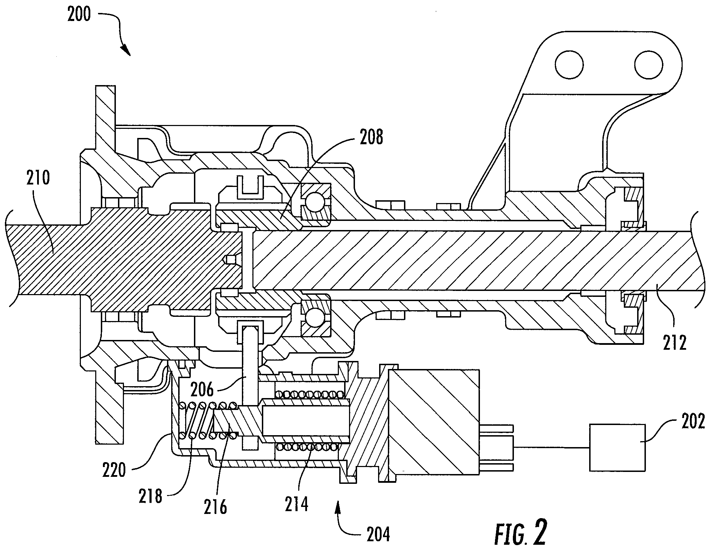

As illustrated in FIG. 2, in an embodiment, the driveline disconnect system 200 comprises a control unit 202, an electromagnetic actuator 204, a clutch fork 206, and a dog-clutch 208. The control unit 202 is in communication with the electromagnetic actuator 204. The electromagnetic actuator 204 is driveably connected to the clutch fork 206, which is drivingly connected with the dog-clutch 208.

The control unit 202 may execute a series of instructions in response to a command by a vehicle operator, data received from a vehicle controller (not shown), or data received from at least one sensor, or a combination thereof. It is understood that the series of instructions executed by the control unit 202 may be stored on a portion of the control unit 202 or on a device (not shown) in communication with the control unit 202. The control unit 202 is in communication with the electromagnetic actuator 204 to place the electromagnetic actuator 204 into the engaged position and to perform a degaussing of the electromagnetic actuator 204.

The electromagnetic actuator 204 comprises a housing 220, a coil 214, an armature 216, and a biasing member 218. In response to a current from the control unit 202 supplied to the coil 214, the coil 214 is energized, creating a magnetic field. The magnetic field causes the armature 216 to actuate and compress the biasing member 218. The clutch fork 206 is also driven by the movement of the armature 216, and the clutch fork 206 actuates the dog-clutch 208. The dog-clutch 208 then becomes drivingly engaged with the driving part 210 and the driven part 212. When the current from the control unit 202 to the coil 214 is interrupted, the dog-clutch 208 remains drivingly engaged because of the residual magnetism of the armature 216.

In addition to the actuation sequence described above, the electromagnetic actuator 204 uses a remanent field to maintain the engaged position of the electromagnetic actuator 204. The remanent field facilitates maintaining the electromagnetic actuator 204 in the engaged position without application of electrical current by the control unit 202. The remanent field may be generated in the coil 214 or in any ferrous portion of the electromagnetic actuator 204. In addition to using a remanent field to maintain the engaged position of the electromagnetic actuator 204, the electromagnetic actuator 204 may also incorporate the use of permanent magnets to maintain the engaged position of the electromagnetic actuator 204. It is to be understood that such principles may also be applied to a variation of the present subject matter in which a remanent field facilitates maintaining an electromagnetic actuator in a disengaged position without application of electrical current.

In an embodiment, to disengage the dog-clutch 208, or aid therein, the remanent field is dissipated. Upon dissipation of the remanent field, the armature 216 is capable of axial movement, and the biasing member 218 drives the armature 216 to a disengaged position. In response to the actuation of the armature 216, the dog-clutch 208 becomes drivingly disengaged from the driving part 210 and the driven part 212.

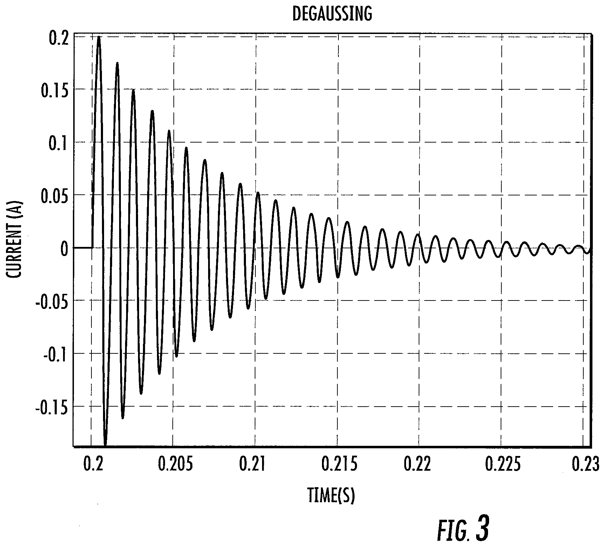

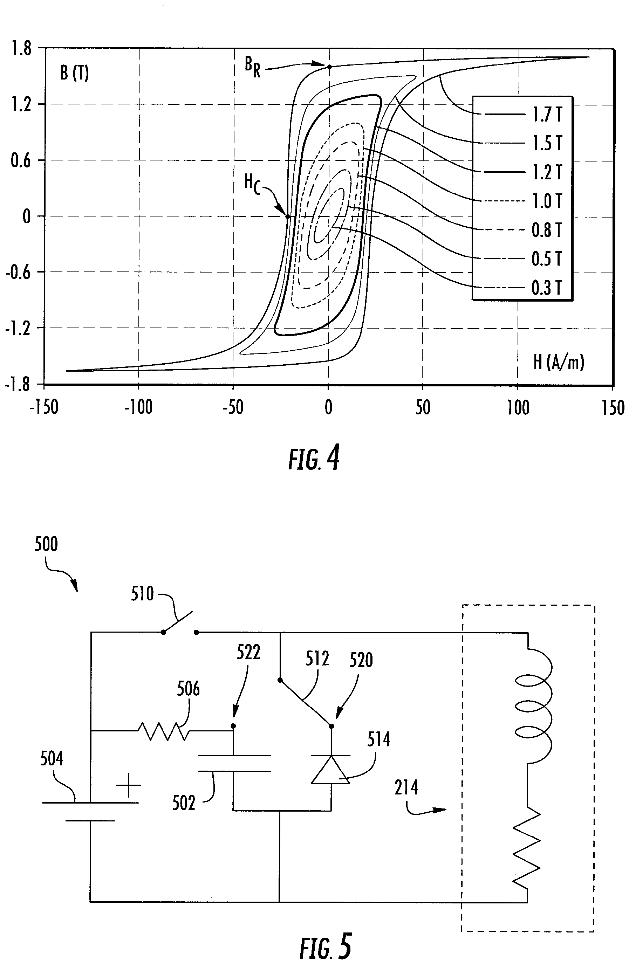

The control unit 202 dissipates the remanent field by performing a degaussing process on the coil 214 or the ferrous portion of the electromagnetic actuator 204 in which the remanent field resides. The degaussing process at least partially dissipates the remanent field from the electromagnetic actuator 204 by applying an alternating current, having decreasing amplitude, to the coil 214. An example of the alternating current utilized in a degaussing process is shown in FIG. 3. The alternating current illustrated in FIG. 3 is an exponentially decaying sine-wave. Application of an alternating current having decreasing amplitude to the coil 214 causes the remanent field of the electromagnetic actuator 204 to experience successively smaller hysteresis curves. An example of a family of hysteresis curves characteristic of the dissipation of the remanent field is illustrated in FIG. 4. In FIG. 4, the notation "B_{R}" represents flux density, the notation "H_{C}" represents coercivtiy, and the notation "T" denotes the unit of measurement the tesla. During the degaussing process the remanent field is dissipated at least until the biasing member 218 is able to overcome the force(s) of the magnetic field of the electromagnetic actuator 204 and drive the armature 216 to a disengaged position. The degaussing process applied to the electromagnetic actuator 204 provides a robust and efficient procedure to disengage the dog-clutch 208.

The control unit 202 can perform the degaussing process in one of a plurality of ways. As non-limiting examples, the control unit 202 may perform the degaussing process using a digital control or an analog circuit. The digital control may comprise, but is not limited to, a 555 timer IC. The control unit 202 may comprise a circuit having a digital current source inverter.

A circuit 500 that may be utilized by the control unit 202 to perform the degaussing process described herein supra is illustrated in FIG. 5. In an embodiment, the circuit 500 may form a portion of the control unit 202 or may be integrated into a portion of the electromagnetic actuator 204. In other embodiments, the circuit 500 may be configured in other arrangements that may perform the degaussing process. In an embodiment, the circuit 500 comprises a capacitor 502, a power supply 504, a resistor 506, a first switch 510, a second switch 512, a diode 514, and the coil 214. The circuit 500 supplies a current to the electromagnetic actuator 204 when the second switch 512 is closed to a first point 520, and the first switch 510 is closed. The electromagnetic actuator 204 remains engaged when the circuit 500 first switch 510 is opened, and no current is supplied to the coil 214. The circuit 500 dissipates the remanent field of the electromagnetic actuator 204 via the degaussing process by closing the second switch 512 to a second point 522 while the first switch 510 is opened; the capacitor 502, starting at a voltage of the power supply 204, then applies a decaying alternating current to the coil 214.

In another embodiment, any circuit comprising the ability to engage the electromagnetic actuator 204 via controlling a current through the coil 214, hold the electromagnetic actuator 204 in a state of engagement without the application of current to the coil 214, and apply a current to the coil 214 that causes the degaussing process, may be utilized by the control unit 202. Additionally, together in another embodiment, or in separate embodiments, the circuit 500 may be modified to use a different mechanism to charge the capacitor 502, add a switch in series with the resistor 506 for charging the capacitor 502, and use a digitally controlled charging circuit that includes a power electronics topology. Furthermore, the first switch 510 may comprise a high frequency switch.

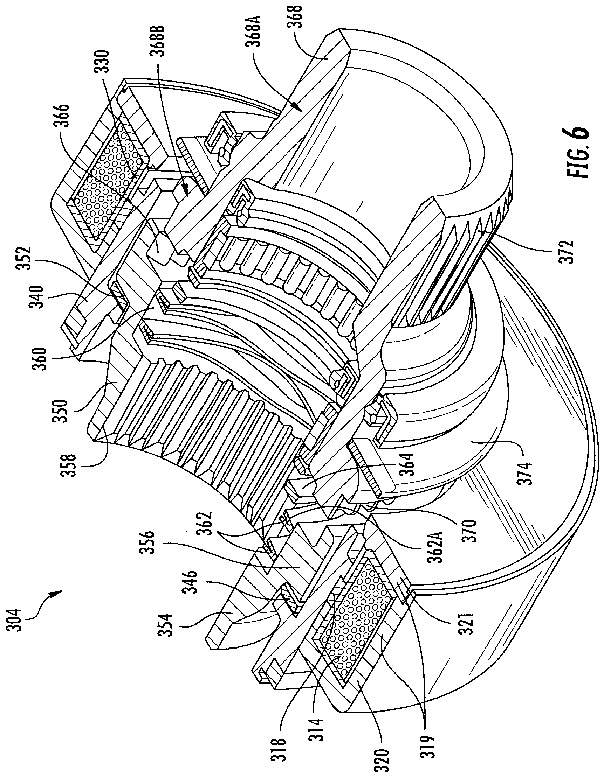

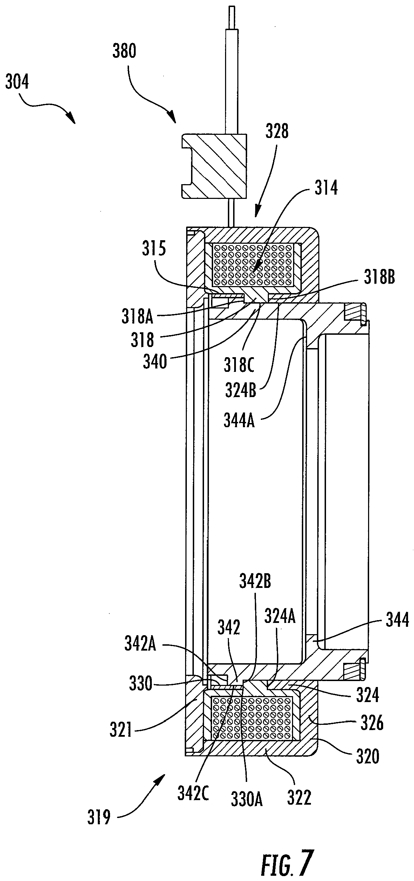

As illustrated in FIGS. 6 and 7, in an embodiment, the electromagnetic actuator 304 comprises a housing assembly 319 including a substantially annular housing 320 and an annular housing plate 321. The annular housing 320 may be a unitary module comprising, but not limited to, a U-shaped or a J-shaped cross-section. The housing 320 includes an annular exterior wall 322 and an annular interior wall 324 connected via a discoid base 326, the base 326 having a bore therethrough defined by the interior wall 324. A coil assembly 314 is disposed in the interior of the housing 320, the housing 320 interior being defined by the exterior wall 322, the interior wall 324, and the base 326. The housing 320 exterior wall 322 also defines an aperture 328 that permits an electrical coupling 380 between the coil assembly 314 and a control unit (not depicted).

The coil assembly 314 comprises multiple wire windings and a potting material, together having a substantially annular geometry. A radial protrusion 318 is disposed on an interior surface 315 of the coil assembly 314. The protrusion 318 comprises a first surface 318A and a second surface 318B. When the electromagnetic actuator 304 is assembled, the second surface 318B is substantially contiguous with or touching an end surface 324A of the housing 320 interior wall 324. The protrusion 318 projects inward from the coil assembly 314 interior surface 315 such that a third surface 318C of the protrusion 318 is substantially level with the plane of the interior surface 324B of the housing 320 interior wall 324.

An annular sleeve 330 is disposed on, and concentric with, the interior surface 315 of the coil assembly 314. A first surface 330A of the sleeve 330 is disposed substantially tangential to the first surface 318A of the coil assembly protrusion 318. In addition, the annular sleeve 330 comprises a thickness between its outer diameter and inner diameter which is less than the distance which the protrusion 318 projects radially-inward from the coil assembly 314 interior surface 315.

Furthermore, a generally annular and cylindrical armature 340 is slideably disposed on the interior surface 324B of the housing 320 and the third surface 318C of the coil assembly 314 projection 318. The armature 340 comprises an outward-radial projection 342 having a first surface 342A, a second surface 342B, and a third surface 342C. The third surface 342C of the armature projection 342 is slideably disposed against the inner diameter of the sleeve 330. The armature 340 also comprises an inward-radial projection 344 having a first surface 344A. Situated axially adjacent the first surface 344A is an annular bushing 346 concentrically disposed inside the armature 340. A magnetic circuit may be formed by at least one of the housing assembly 319, the housing 320, and the armature 340 when a current is applied to the coil assembly 314.

A first clutch module 350 is also positioned concentrically within the armature 340. The first clutch module 350 illustrated in FIG. 6 comprises a substantially cylindrical geometry, however, the clutch module 350 may comprise other shapes including, but not limited to, rectangular, discoid, and conical geometries. A surface 352 of the first clutch module 350 is located axially-adjacent to the bushing 346. The first clutch module 350 is rotatable and capable of axial actuation. The first clutch module 350 further comprises a first portion 354 and a second portion 356. The first portion 354 comprises inwardly extending radial splines 358 drivingly engaged with splines on a differential half-shaft (not depicted). The second portion 356 of the first clutch module 350 comprises a set of clutch teeth 366. The second portion 356 of the first clutch module 350 also comprises an annular groove 360 in which is located a biasing member 362. The biasing member 362 may comprise, but is not limited to, a wave spring. A first end 362A of the biasing member 362 abuts and is axially-adjacent to a snap ring 364. The snap ring 364 is axially fixed, and operatively connected to a second clutch module 368.

When the electromagnetic actuator 304 is engaged, the first clutch module 350 clutch teeth 366 mesh with a set of clutch teeth 370 on the second clutch module 368. Additionally, when the first clutch module 350 engages the second clutch module 368, the biasing member 362 is compressed between the first clutch module 350 and the snap ring 364. The second clutch module 368 is axially fixed and comprises a first portion 368A and a second portion 368B, the second portion 368B comprising the clutch teeth 370. The first portion 368A comprises outwardly extending radial splines 372 drivingly engaged with splines (not depicted) on a half-shaft (not depicted) which is driveably connected to a wheel (not depicted). The second clutch module 368 is substantially axially-fixed relative to a housing of, for example, a front drive unit (not depicted) or a power transfer unit via an annular bushing 374 concentrically disposed on an exterior surface of the second portion 368B of the second clutch module 368. The second clutch module 368 illustrated in FIG. 6 comprises a substantially cylindrical geometry, however, the clutch module 368 may comprise other shapes including, but not limited to, rectangular, discoid, and conical geometries.

The first clutch module 350 may comprise, but is not limited to, a unitary module, or an apparatus including the first portion 354 comprising a separable component having a means for driving engagement with the differential half shaft, and the second portion 356 comprising a separable component having a means of driving engagement with the second clutch module 368. The second clutch module 368 may also comprise, but is not limited to, a unitary module, or an apparatus including the first portion 368A comprising a separable component having a means for driving engagement with the half shaft, and the second portion 368B comprising a separable component having a means of driving engagement with the first clutch module 350.

When current from the control unit is directed to the coil 314, thereby engaging the electromagnetic actuator 304, the armature 340 actuates and axially drives the first clutch module 350, compressing the biasing member 362 until the armature outward-radial projection first surface 342A abuts the interior surface of the housing plate 321 and the first clutch module clutch teeth 366 mesh with the clutch teeth 370 on the second clutch module 368. When the clutch teeth 366 and 370 are engaged, the flow of current to the coil 314 is stopped; the armature 340 remains in the engaged position with outward-radial projection first surface 342A disposed axially adjacent to the inner surface of the housing plate 321 such that there is no, or only a minimal, magnetic air gap there-between, and the remanent field of the electromagnetic actuator 304 maintains the clutch engagement.

The control unit dissipates the remanent field by performing a degaussing process on the electromagnetic actuator 304 in which the remanent field resides. The degaussing process at least partially dissipates the remanent field from the electromagnetic actuator 304 by applying an alternating current, having decreasing amplitude overtime, to the coil 314. An example of the alternating current and the hysteresis curves caused thereby in a degaussing process are described above and illustrated in FIGS. 3 and 4. The degaussing process dissipates the remanent field at least until the biasing member 362. overcomes the force(s) of the remanent field and drives the armature 340 to a disengaged position, thereby disengaging the clutch teeth 366 and 370.

A module is defined here as an isolatable element that has a defined interface with other elements, unless otherwise indicated. Residual magnetism, remanent field, remanence, and uninterrupted magnetic flux may be commonly interchanged herein and define the same characteristic or occurrence, unless otherwise indicated.

While various embodiments of the presently disclosed subject matter have been described above, it should be understood that they have been presented by way of example, and not limitation. The embodiments described above are therefore to be considered in all respects as illustrative-not restrictive.

## Claims

1. A method of disengaging an axle disconnect system (200), which comprises:
providing an actuator (304) comprising:
a coil (314) having a plurality of copper windings,
a housing (320) at least partially surrounding said coil (314),
an armature (340) slidably disposed within said housing (320) and said coil (314),
wherein said actuator (304) includes a first axial position of said armature (340) and a second axial position of said armature (340),
a magnetic circuit comprising at least one of said housing (320) and said armature (340), and
applying a current to said coil (314), whereby said armature (340) is actuated from said first axial position to said second axial position;
developing an uninterrupted magnetic flux through said magnetic circuit,
ceasing flow of said current to said coil (314);
maintaining said armature (340) in said second axial position via said uninterrupted magnetic flux; and
applying an alternating current having decreasing amplitude over time to said coil (314) such that said magnetic flux through said magnetic circuit is decreased.

2. The method of disengaging an axle disconnect system (200) as recited in claim 1, wherein the step of providing an actuator (304) includes:
providing at least one of said housing (320) and said armature (340) comprising a ferrous material capable of having residual magnetism.

3. The method of disengaging an axle disconnect system (200) as recited in claim 1, wherein the step of applying said current to said coil (314) includes:
placing said coil (314) in electrical connection with a digital control circuit (202) including power electronics topology; and
applying said current from said digital control circuit (202) to said coil (314).

4. The method of disengaging an axle disconnect system (200) as recited in claim 1, wherein the step of providing an actuator (304) includes:
providing an electrical circuit (500) having,
a power source (504),
a capacitor (502),
a resistor (506) in electrical connection with said capacitor (502) and said power source (504),
a diode (514),
a first switch (510) selectively placing said power source in electrical connection with said coil (314), and
a second switch (512) selectively placing said coil (314) in electrical connection with said capacitor (502); and selectively placing said coil (314) in electrical connection with said diode (514); and placing said electrical circuit in electrical connection with said coil (314).

5. The method of disengaging an axle disconnect system (200) as recited in claim 4, wherein the step of applying said current to said coil (314) includes:
closing said first switch (510) placing said power source in electrical connection with said coil (314).

6. The method of disengaging an axle disconnect system (200) as recited in claim 4, wherein the step of ceasing flow of said current to said coil (314) includes:
closing said second switch (512) placing said coil (314) in electrical connection with said diode (514); and
opening said first switch (510).

7. The method of disengaging an axle disconnect system (200) as recited in claim 4, wherein the step of applying said alternating current having decreasing amplitude over time to said coil (314) includes:
closing said second switch placing said capacitor in electrical connection with said coil (314).

8. The method of disengaging an axle disconnect system (200) as recited in claim 1, wherein the step of providing an actuator (304) includes:
providing a first clutch module (350) engaged with said armature (340); and
providing a second clutch module (368) disposed axially adjacent to said first clutch module (350) for selective engagement with said first clutch module (350).

9. The method of disengaging an axle disconnect system (200) as recited in claim 8, wherein the step of actuating said armature (340) from said first axial position to said second axial position includes:
driving said first clutch module (350) into engagement with said second clutch module (368).

10. The method of disengaging an axle disconnect system (200) as recited in claim 8, wherein the step of providing an actuator (304) includes:
providing a biasing member (362) engaged with said first clutch module (350) and said second clutch module (368).

11. The method of disengaging an axle disconnect system (200) as recited in claim 10, wherein the step of driving said first clutch module (350) into engagement with said second clutch module (368) includes:
loading said biasing member (362), whereby said biasing member is compressed between said first clutch module (350) and said second clutch module (368).

12. The method of disengaging an axle disconnect system (200) as recited in claim 11, wherein the step of applying an alternating current having decreasing amplitude over time to said coil (314) includes:
permitting said biasing member (362) to decompress, thereby disengaging said first clutch module (350) and said second clutch module (368).

13. The method of disengaging an axle disconnect system (200) as recited in claim 4, wherein the step of providing an electrical circuit (500) includes:
providing a third switch in series with said resistor (506).

14. The method of disengaging an axle disconnect system (200) as recited in claim 13, wherein the step of ceasing flow of said current to said coil (314) includes:
closing said second switch (512) placing said coil (314) in electrical connection with said diode;
closing said third switch placing said power source (504) in electrical connection with said capacitor (502); and
opening said first switch (510), whereby said power source charges said capacitor.

15. The method of disengaging an axle disconnect system (200) as recited in claim 1, which comprises:
providing an actuator (304) comprising,
a control unit in electrical connection with said coil (314),
an electrical circuit (500), in electrical connection with said control unit (202), comprising,
a power source (504),
a capacitor (502),
a resistor (506) in electrical connection with said capacitor (502) and said power source (504),
a diode (514),
a first switch (510) selectively placing said power source in electrical connection with said coil (314), and
a second switch (512) selectively placing said coil (314) in electrical connection with said capacitor (502), and selectively placing said coil (314) in electrical connection with said diode (514),
a first clutch module (350) engaged with said armature (340),
a second clutch module (368) disposed axially adjacent to said first clutch module (350) for selective engagement with said first clutch module (350),
a biasing member (362) engaged with said first clutch module (350) and said second clutch module (368),
applying a current to said coil (314) by closing said first switch placing said power source in electrical connection with said coil (314),
actuating said armature (340) from said first axial position to said second axial position, thereby driving said first clutch module (350) into engagement with said second clutch module (368), and loading said biasing member (362) in a compressed state between said first clutch module (350) and said second clutch module (368),
developing an uninterrupted magnetic flux through said magnetic circuit,
ceasing flow of said current to said coil (314) by closing said second switch to place said coil (314) in electrical connection with said diode (514), and opening said first switch (510),
maintaining said armature (340) in said second axial position via said uninterrupted magnetic flux, and
closing said second switch (512) placing said capacitor (502) in electrical connection with said coil (314), thereby applying an alternating current having decreasing amplitude over time to said coil (314) such that said magnetic flux through said magnetic circuit is decreased, permitting said biasing member (362) to decompress and disengage said first clutch module (350) and said second clutch module (368).

## Patentansprüche

1. Verfahren zum Ausrücken eines Achstrennsystems (200), das umfasst:
Bereitstellen eines Aktuators (304), umfassend:
eine Spule (314) mit einer Vielzahl von Kupferwicklungen,
ein Gehäuse (320), das die Spule (314) mindestens teilweise umgibt,
eine Armatur (340), die verschiebbar in dem Gehäuse (320) und der Spule (314) angeordnet ist,
wobei der Aktuator (304) eine erste axiale Position der Armatur (340) und eine zweite axiale Position der Armatur (340) umfasst,
einen Magnetkreis, umfassend mindestens eine/s aus dem Gehäuse (320) und der Armatur (340), und
Anwenden eines Stroms auf die Spule (314), wobei die Armatur (340) von der ersten axialen Position in die zweite axiale Position betätigt wird;
Entwickeln eines ununterbrochenen Magnetflusses durch den Magnetkreis, den Fluss des Stroms zu der Spule (314) beendend;
Halten der Armatur (340) in der zweiten axialen Position über den ununterbrochenen Magnetfluss; und
Anwenden eines Wechselstroms mit sich im Laufe der Zeit verringernder Amplitude auf die Spule (314), sodass der Magnetfluss durch den Magnetkreis verringert wird.

2. Verfahren zum Ausrücken eines Achstrennsystems (200) nach Anspruch 1, wobei der Schritt des Bereitstellens eines Aktuators (304) umfasst:
Bereitstellen mindestens eine/r/s aus dem Gehäuse (320) und der Armatur (340), umfassend ein eisenhaltiges Material, das einen Restmagnetismus haben kann.

3. Verfahren zum Ausrücken eines Achstrennsystems (200) nach Anspruch 1, wobei der Schritt des Anwendens des Stroms auf die Spule (314) umfasst:
Bringen der Spule (314) in elektrische Verbindung mit einer digitalen Steuerschaltung (202), umfassend Leistungselektroniktopologie; und
Anwenden des Stroms von der digitalen Steuerschaltung (202) auf die Spule (314).

4. Verfahren zum Ausrücken eines Achstrennsystems (200) nach Anspruch 1, wobei der Schritt des Bereitstellens eines Aktuators (304) umfasst:
Bereitstellen einer elektrischen Schaltung (500), welche aufweist:
eine Energiequelle (504),
einen Kondensator (502),
einen Widerstand (506) in elektrischer Verbindung mit dem Kondensator (502) und der Energiequelle (504),
eine Diode (514),
einen ersten Schalter (510), der die Energiequelle selektiv in elektrische Verbindung mit der Spule (314) bringt, und
einen zweiten Schalter (512), der die Spule (314) selektiv in elektrische Verbindung mit dem Kondensator (502) bringt; und der die Spule (314) selektiv in elektrische Verbindung mit der Diode (514) bringt; und der die elektrische Schaltung in elektrische Verbindung mit der Spule (314) bringt.

5. Verfahren zum Ausrücken eines Achstrennsystems (200) nach Anspruch 4, wobei der Schritt des Anwendens des Stroms auf die Spule (314) umfasst:
Schließen des ersten Schalters (510), der die Energiequelle in elektrische Verbindung mit der Spule (314) bringt.

6. Verfahren zum Ausrücken eines Achstrennsystems (200) nach Anspruch 4, wobei der Schritt des Beendens des Stroms zu der Spule (314) umfasst:
Schließen des zweiten Schalters (512), der die Spule (314) in elektrische Verbindung mit der Diode (514) bringt; und
Öffnen des ersten Schalters (510).

7. Verfahren zum Ausrücken eines Achstrennsystems (200) nach Anspruch 4, wobei der Schritt des Anwendens des Wechselstroms mit sich im Laufe der Zeit verringernder Amplitude auf die Spule (314) umfasst:
Schließen des zweiten Schalters, der den Kondensator in elektrische Verbindung mit der Spule (314) bringt.

8. Verfahren zum Ausrücken eines Achstrennsystems (200) nach Anspruch 1, wobei der Schritt des Bereitstellens eines Aktuators (304) umfasst:
Bereitstellen eines ersten Kupplungsmoduls (350) im Eingriff mit der Armatur (340); und
Bereitstellen eines zweiten Kupplungsmoduls (368), dem ersten Kupplungsmodul (350) axial benachbart angeordnet, für selektives Eingreifen mit dem ersten Kupplungsmodul (350).

9. Verfahren zum Ausrücken eines Achstrennsystems (200) nach Anspruch 8, wobei der Schritt des Betätigens der Armatur (340) aus der ersten axialen Position in die zweite axiale Position umfasst:
Treiben des ersten Kupplungsmoduls (350) in Eingriff mit dem zweiten Kupplungsmodul (368).

10. Verfahren zum Ausrücken eines Achstrennsystems (200) nach Anspruch 8, wobei der Schritt des Bereitstellens eines Aktuators (304) umfasst:
Bereitstellen eines Vorspannelements (362) im Eingriff mit dem ersten Kupplungsmodul (350) und dem zweiten Kupplungsmodul (368).

11. Verfahren zum Ausrücken eines Achstrennsystems (200) nach Anspruch 10, wobei der Schritt des Treibens des ersten Kupplungsmoduls (350) in Eingriff mit dem zweiten Kupplungsmodul (368) umfasst:
Belasten des Vorspannelements (362), wobei das Vorspannelement zwischen dem ersten Kupplungsmodul (350) und dem zweiten Kupplungsmodul (368) komprimiert ist.

12. Verfahren zum Ausrücken eines Achstrennsystems (200) nach Anspruch 11, wobei der Schritt des Anwendens eines Wechselstroms mit sich im Laufe der Zeit verringernder Amplitude auf die Spule (314) umfasst:
dem Vorspannelement (362) zu gestatten, zu dekomprimieren, dabei das erste Kupplungsmodul (350) und das zweite Kupplungsmodul (368) ausrückend.

13. Verfahren zum Ausrücken eines Achstrennsystems (200) nach Anspruch 4, wobei der Schritt des Bereitstellens einer elektrischen Schaltung (500) umfasst:
Bereitstellen eines dritten Schalters in Serie mit dem Widerstand (506).

14. Verfahren zum Ausrücken eines Achstrennsystems (200) nach Anspruch 13, wobei der Schritt des Beendens des Stroms zu der Spule (314) umfasst:
Schließen des zweiten Schalters (512), der die Spule (314) in elektrische Verbindung mit der Diode bringt;
Schließen des dritten Schalters, der die Energiequelle (504) in elektrische Verbindung mit dem Kondensator (502) bringt; und
Öffnen des ersten Schalters (510), wobei die Energiequelle den Kondensator lädt.

15. Verfahren zum Ausrücken eines Achstrennsystems (200) nach Anspruch 1, das umfasst:
Bereitstellen eines Aktuators (304), umfassend:
eine Steuereinheit in elektrischer Verbindung mit der Spule (314),
eine elektrische Schaltung (500) in elektrischer Verbindung mit der Steuereinheit (202), umfassend:
eine Energiequelle (504),
einen Kondensator (502),
einen Widerstand (506) in elektrischer Verbindung mit dem Kondensator (502) und der Energiequelle (504),
eine Diode (514),
einen ersten Schalter (510), der die Energiequelle selektiv in elektrische Verbindung mit der Spule (314) bringt, und
einen zweiten Schalter (512), der die Spule (314) selektiv in elektrische Verbindung mit dem Kondensator (502) bringt, und die Spule (314) selektiv in elektrische Verbindung mit der Diode (514) bringt,
ein erstes Kupplungsmodul (350) im Eingriff mit der Armatur (340),
ein zweites Kupplungsmodul (368), dem ersten Kupplungsmodul (350) axial benachbart angeordnet, für selektives Eingreifen mit dem ersten Kupplungsmodul (350),
ein Vorspannelement (362) im Eingriff mit dem ersten Kupplungsmodul (350) und dem zweiten Kupplungsmodul (368),
Anwenden eines Stroms auf die Spule (314) durch Schließen des ersten Schalters, der die Energiequelle in elektrische Verbindung mit der Spule (314) bringt,
Betätigen der Armatur (340) aus der ersten axialen Position in die zweite axiale Position, dabei Treiben des ersten Kupplungsmoduls (350) in Eingriff mit dem zweiten Kupplungsmodul (368), und Belasten des Vorspannelements (362) in einem komprimierten Zustand zwischen dem ersten Kupplungsmodul (350) und dem zweiten Kupplungsmodul (368),
Entwickeln eines ununterbrochenen Magnetflusses durch den Magnetkreis,
Beenden des Stromflusses zu der Spule (314) durch Schließen des zweiten Schalters, um die Spule (314) in elektrische Verbindung mit der Diode (514) zu bringen, und Öffnen des ersten Schalters (510),
Halten der Armatur (340) in der zweiten axialen Position über den ununterbrochenen Magnetfluss, und
Schließen des zweiten Schalters (512), wodurch der Kondensator (502) in elektrische Verbindung mit der Spule (314) gebracht wird, dabei Anwenden eines Wechselstroms mit sich im Laufe der Zeit verringernder Amplitude auf die Spule (314), sodass der Magnetfluss durch den Magnetkreis verringert wird, damit dem Vorspannelement (362) gestattend, zu dekomprimieren und das erste Kupplungsmodul (350) und das zweite Kupplungsmodul (368) auszurücken.

## Revendications

1. Procédé de désengagement d'un système de déconnexion d'essieu (200), lequel procédé comprend :
la fourniture d'un actionneur (304) qui comprend :
une bobine (314) qui comporte une pluralité d'enroulements en cuivre ;
un logement (320) qui entoure au moins partiellement ladite bobine (314) ;
une armature (340) qui est disposée de façon coulissante à l'intérieur dudit logement (320) et de ladite bobine (314) ;
dans lequel ledit actionneur (304) inclut une première position axiale de ladite armature (340) et une seconde position axiale de ladite armature (340) ; et
un circuit magnétique qui comprend au moins un élément constitutif pris parmi ledit logement (320) et ladite armature (340) ;
l'application d'un courant sur ladite bobine (314), d'où il résulte que ladite armature (340) est actionnée depuis ladite première position axiale jusqu'à ladite seconde position axiale ;
le développement d'un flux magnétique ininterrompu au travers dudit circuit magnétique ; la cessation de la circulation dudit courant sur ladite bobine (314) ;
le maintien de ladite armature (340) dans ladite seconde position axiale via ledit flux magnétique ininterrompu ; et
l'application d'un courant alternatif qui présente une amplitude décroissante en fonction du temps sur ladite bobine (314) de telle sorte que ledit flux magnétique au travers dudit circuit magnétique soit diminué.

2. Procédé de désengagement d'un système de déconnexion d'essieu (200) tel que revendiqué selon la revendication 1, dans lequel l'étape de fourniture d'un actionneur (304) inclut :
la fourniture d'au moins un élément constitutif pris parmi ledit logement (320) et ladite armature (340) qui comprend un matériau ferreux permettant de disposer d'un magnétisme résiduel.

3. Procédé de désengagement d'un système de déconnexion d'essieu (200) tel que revendiqué selon la revendication 1, dans lequel l'étape d'application dudit courant sur ladite bobine (314) inclut :
le placement de ladite bobine (314) en connexion électrique avec un circuit de commande numérique (202) qui inclut une topologie d'électronique de puissance ; et
l'application dudit courant en provenance dudit circuit de commande numérique (202) sur ladite bobine (314).

4. Procédé de désengagement d'un système de déconnexion d'essieu (200) tel que revendiqué selon la revendication 1, dans lequel l'étape de fourniture d'un actionneur (304) inclut :
la fourniture d'un circuit électrique (500) qui comporte :
une source d'énergie électrique (504) ;
un condensateur (502) ;
une résistance (506) qui est en connexion électrique avec ledit condensateur (502) et avec ladite source d'énergie électrique (504) ;
une diode (514) ;
un premier commutateur (510) qui place de façon sélective ladite source d'énergie électrique en connexion électrique avec ladite bobine (314) ; et
un deuxième commutateur (512) qui place de façon sélective ladite bobine (314) en connexion électrique avec ledit condensateur (502) ; et qui place de façon sélective ladite bobine (314) en connexion électrique avec ladite diode (514) ; et qui place ledit circuit électrique en connexion électrique avec ladite bobine (314).

5. Procédé de désengagement d'un système de déconnexion d'essieu (200) tel que revendiqué selon la revendication 4, dans lequel l'étape d'application dudit courant sur ladite bobine (314) inclut :
la fermeture dudit premier commutateur (510), ce qui place ladite source d'énergie électrique en connexion électrique avec ladite bobine (314).

6. Procédé de désengagement d'un système de déconnexion d'essieu (200) tel que revendiqué selon la revendication 4, dans lequel l'étape de cessation de la circulation dudit courant sur ladite bobine (314) inclut :
la fermeture dudit deuxième commutateur (512), ce qui place ladite bobine (314) en connexion électrique avec ladite diode (514) ; et
l'ouverture dudit premier commutateur (510).

7. Procédé de désengagement d'un système de déconnexion d'essieu (200) tel que revendiqué selon la revendication 4, dans lequel l'étape d'application dudit courant alternatif qui présente une amplitude décroissante en fonction du temps sur ladite bobine (314) inclut :
la fermeture dudit deuxième commutateur, ce qui place ledit condensateur en connexion électrique avec ladite bobine (314).

8. Procédé de désengagement d'un système de déconnexion d'essieu (200) tel que revendiqué selon la revendication 1, dans lequel l'étape de fourniture d'un actionneur (304) inclut :
la fourniture d'un premier module d'embrayage (350) qui est engagé avec ladite armature (340) ; et
la fourniture d'un second module d'embrayage (368) qui est disposé axialement de telle sorte qu'il soit adjacent audit premier module d'embrayage (350) pour son engagement sélectif avec ledit premier module d'embrayage (350).

9. Procédé de désengagement d'un système de déconnexion d'essieu (200) tel que revendiqué selon la revendication 8, dans lequel l'étape d'actionnement de ladite armature (340) depuis ladite première position axiale jusqu'à ladite seconde position axiale inclut :
le pilotage dudit premier module d'embrayage (350) pour l'amener en engagement avec ledit second module d'embrayage (368).

10. Procédé de désengagement d'un système de déconnexion d'essieu (200) tel que revendiqué selon la revendication 8, dans lequel l'étape de fourniture d'un actionneur (304) inclut :
la fourniture d'un élément de sollicitation (362) qui est engagé avec ledit premier module d'embrayage (350) et avec ledit second module d'embrayage (368).

11. Procédé de désengagement d'un système de déconnexion d'essieu (200) tel que revendiqué selon la revendication 10, dans lequel l'étape de pilotage dudit premier module d'embrayage (350) pour l'amener en engagement avec ledit second module d'embrayage (368) inclut :
le chargement dudit élément de sollicitation (362), d'où il résulte que ledit élément de sollicitation est comprimé entre ledit premier module d'embrayage (350) et ledit second module d'embrayage (368).

12. Procédé de désengagement d'un système de déconnexion d'essieu (200) tel que revendiqué selon la revendication 11, dans lequel l'étape d'application d'un courant alternatif qui présente une amplitude décroissante en fonction du temps sur ladite bobine (314) inclut :
le fait de laisser ledit élément de sollicitation (362) se décomprimer, d'où ainsi son désengagement vis-à-vis dudit premier module d'embrayage (350) et vis-à-vis dudit second module d'embrayage (368).

13. Procédé de désengagement d'un système de déconnexion d'essieu (200) tel que revendiqué selon la revendication 4, dans lequel l'étape de fourniture d'un circuit électrique (500) inclut :
la fourniture d'un troisième commutateur en série avec ladite résistance (506).

14. Procédé de désengagement d'un système de déconnexion d'essieu (200) tel que revendiqué selon la revendication 13, dans lequel l'étape de cessation de la circulation dudit courant sur ladite bobine (314) inclut :
la fermeture dudit deuxième commutateur (512), ce qui place ladite bobine (314) en connexion électrique avec ladite diode ;
la fermeture dudit troisième commutateur, ce qui place ladite source d'énergie électrique (504) en connexion électrique avec ledit condensateur (502) ; et
l'ouverture dudit premier commutateur (510), d'où il résulte que ladite source d'énergie électrique charge ledit condensateur.

15. Procédé de désengagement d'un système de déconnexion d'essieu (200) tel que revendiqué selon la revendication 1, lequel procédé comprend :
la fourniture d'un actionneur (304) qui comprend :
une unité de commande qui est en connexion électrique avec ladite bobine (314) ;
un circuit électrique (500) qui est en connexion électrique avec ladite unité de commande (202), lequel circuit électrique comprend :
une source d'énergie électrique (504) ;
un condensateur (502) ;
une résistance (506) qui est en connexion électrique avec ledit condensateur (502) et avec ladite source d'énergie électrique (504) ;
une diode (514) ;
un premier commutateur (510) qui place de façon sélective ladite source d'énergie électrique en connexion électrique avec ladite bobine (314) ; et
un second commutateur (512) qui place de façon sélective ladite bobine (314) en connexion électrique avec ledit condensateur (502) et qui place de façon sélective ladite bobine (314) en connexion électrique avec ladite diode (514) ;
un premier module d'embrayage (350) qui est engagé avec ladite armature (340) ;
un second module d'embrayage (368) qui est disposé axialement de telle sorte qu'il soit adjacent audit premier module d'embrayage (350) pour son engagement sélectif avec ledit premier module d'embrayage (350) ; et
un élément de sollicitation (362) qui est engagé avec ledit premier module d'embrayage (350) et avec ledit second module d'embrayage (368) ;
l'application d'un courant sur ladite bobine (314) en fermant ledit premier commutateur, ce qui place ladite source de d'énergie électrique en connexion électrique avec ladite bobine (314) ;
l'actionnement de ladite armature (340) depuis ladite première position axiale jusqu'à ladite seconde position axiale, d'où ainsi le pilotage dudit premier module d'embrayage (350) pour l'amener en engagement avec ledit second module d'embrayage (368), et le chargement dudit élément de sollicitation (362) dans un état comprimé entre ledit premier module d'embrayage (350) et ledit second module d'embrayage (368) ;
le développement d'un flux magnétique ininterrompu au travers dudit circuit magnétique ;
la cessation de la circulation dudit courant sur ladite bobine (314) en fermant ledit second commutateur afin de placer ladite bobine (314) en connexion électrique avec ladite diode (514), et l'ouverture dudit premier commutateur (510) ;
le maintien de ladite armature (340) dans ladite seconde position axiale via ledit flux magnétique ininterrompu ; et
la fermeture dudit second commutateur (512), ce qui place ledit condensateur (502) en connexion électrique avec ladite bobine (314), d'où ainsi l'application d'un courant alternatif qui présente une amplitude décroissante en fonction du temps sur ladite bobine (314) de telle sorte que ledit flux magnétique au travers dudit circuit magnétique soit diminué, ce qui permet de laisser ledit élément de sollicitation (362) se décomprimer et se désengager vis-à-vis dudit premier module d'embrayage (350) et vis-à-vis dudit second module d'embrayage (368).
